# EUROPEAN PATENT SPECIFICATION

(11) **EP 3 210 448 B1**
(45) Date of publication and mention of the grant of the patent: **22.09.2021**
(21) Application number: 17000184.6
(22) Date of filing: 07.02.2017
(51) Int. Cl.: A01B 79/00

(54) **SYSTEM FOR DETECTING, PROCESSING AND SHARING DATA RELATED TO OPERATING PARAMETERS OF A PLOUGH**
SYSTEM ZUR ERKENNUNG, ZUR VERARBEITUNG UND GEMEINSAMEN NUTZUNG VON BETRIEBSPARAMETERN EINES PFLUGES
SYSTÈME PERMETTANT DE DÉTECTER, DE TRAITER ET DE PARTAGER DES DONNÉES RELATIVES À DES PARAMÈTRES DE FONCTIONNEMENT D'UNE CHARRUE

(30) Priority: 23.02.2016 IT UB20160938
(43) Date of publication of application: 30.08.2017
(73) Proprietor: Moro Aratri S.R.L., 24056 Fontanella (BG) (IT)
(72) Inventor: MORO, Andrea, 24056 Fontanella (BG) (IT)
(74) Representative: Garavelli, Paolo

(56) References cited:
- EP-A1- 1 300 061
- DE-A1-102004 054 749
- DE-U1- 20 221 564

## Description

The present invention refers to a system for detecting, processing and sharing data related to operating parameters of a plough.

Everey known model of plough has various types of component members, which can be separated into three different categories, but all linked to a carrier frame, the beam. Therefore, working members, fastening members and regulating members are distinguished.

Working members are always applied to the rear part of the beam. Among them, the following can be distinguished: the mouldboard, known as lamina with a curved shape ending with a sort of steel blade; the plowshare adapted to cut the earth horizontally when the plough advaces; the jointer, known as vertical blade, placed in front of the mouldboard, which strikes an earth sod at vertical level, removing possible roots being present; the chisel, as additional steel bit placed on the end of the plowshare, which enables a more efficient penetration in the earth.

The fastening members comprise all those elements placed at front level in the beam, whose purpose if fastening the plough to the tractor and which will perform the towing.

Usually equipped with three points to be fastened to the tractor through two side pins and a central pin, the regulating members are those elements which regulate the plowing depth, width and inclinaction.

In such context, the elements useful to be detected when following the working of a plough, to decide its purchase and anyway its use, are of an operating and dynamic type. The operating elements refer to the quantitative and qualitative evaluation of the performed work, and essentially tend to determine the sizes of the slice, its efficient overturning, the crumbling degree of the ground, the working capacity of the plough. The dynamic elements, instead, refer to the determination of spent energy to generate the advancement of the tool under certain working conditions.

The sizes of the cross section of the slice, such as depth and width, are determined by using a rule and are interesting, since they allow obtaining surface and volume of moved earth. For such purpose, having to collect reliable data, it is not enough to simply perform sporadic measures on the furrow, but a detection is necessary, for continuous samples of the geometric elements of the worked ground, adapted to allow also determining the regularity or not of the furrow bottom.

The overturning efficiency is evaluated depending on the earthing degree of the vegetable layer or, anyway, of the surface layer of the plowed ground. It is very important for agronomic purposes, being indispensable, for example, when a manuring or culture residuals of the previous cultivation have to be earthed. As known, the overturning efficiency occurs when the slice is overturned with a rotation of about 135° and rests with an inclination of 45° on the one overturned by the previous pass.

The crumbling degree of the slice of earth depends on the concourse of many factors, such as the cylindrical developemt of the surface of the mouldboard and the related overturning angle, the ratio between depth and width of the slices of earth, the type of ground and the relative humidity contained therein and, within certain limits, the advancement speed of the tractor. It can be deduced that, for evaluating the efficient overturning of the ground and the crumbling degree of the ground itself, a device is necessary which is capable of continuously measuring the plough inclination.

The determination of spent energy to generate the advancement of the plough is directly connected to the efficiency of the tractor power; however, it changes depending on the surface plowing depth, medium or deep, on the type of argillaceous or calcareous ground, and on the height profile of the cultivated land, plane, hill or mountain.

In such context, a device is known in the art, as disclosed in KR20140058776, adapted to control the plowing depth. Such device comprises a first sensor which measures the working depth, and a second sensor which measures the inclination of the tool, evaluating the position of a connecting arm of the tractor. Data are afterwards transmitted to the control unit and stored. The measured parameters, though being detected during the plowing work, are related to the actual position of the connecting elements and not to the position of the plough.

A device is also known, as disclosed in US2014277968, adapted to reduce the efforts supported by the tractor when plowing. Such device measures the tractor effort through the measure of the wheel sliding. Both plowing depth and effort which the tractor must support when advancing, are set on the device itself by an operator. If the previously set effort value is exceeded, the device goes on lifting the plough, reducing the plowing depth. It is clear, however, how, though minimizing the stresses that the tractor must support, the known device prevents the operator from defining a constant plowing depth, and from taking into account also different parameters, such as weather condition or type of ground. EP 1 300 061 A1 discloses a further example of a plough control device based on sensing working parameters.

A device is also known in the art which is adapted to receive a radio signal through linear sensors placed inside oleodynamic pistons. Information are sent through an electronic cable to the electronic tractor unit, or to an external unit, which deals with the actuation, through solenoid valves, of hydraulic jacks to reach the desired settings. Tough allowing to display the quantity, however, the device performs the function of positioning device.

Consequently, a need is still felt in the art for a system which allows an operator to obtain in real time, during the plowing activities, information related to operating parameters of the plough, such as, for example, the sizes of the side positioning of the plough and the slice depth in order to allow the operator to evaluate and optimally regulate the plough operation, in real time.

Object of the present invention is solving the above prior art problems, by providing a system for detecting, processing and sharing data related to operating parameters of a plough.

Another object of the present invention is providing a system for detecting, processing and sharing data capable of providing the operator with data related to operating parameters of a plough, enabling its regulation in real time.

A further object of the present invention is providing a system capable of supplying in real time the operator with data related to operating parameters of a plough through wireless data transmitting means.

The above and other objects and advantages of the invention, as will appear from the following description, are obtained with a system for detecting, processing and sharing data and its related method as claimed in claim 1.

It is intended that the enclosed claim is an integral part of the present description.

It will be immediately obvious that numerous variations and modificationtions (for example related to shape, sizes, arrangements and parts with equivalent functionality) could be made to what is described, without departing from the scope of the invention as appears from the enclosed claim.

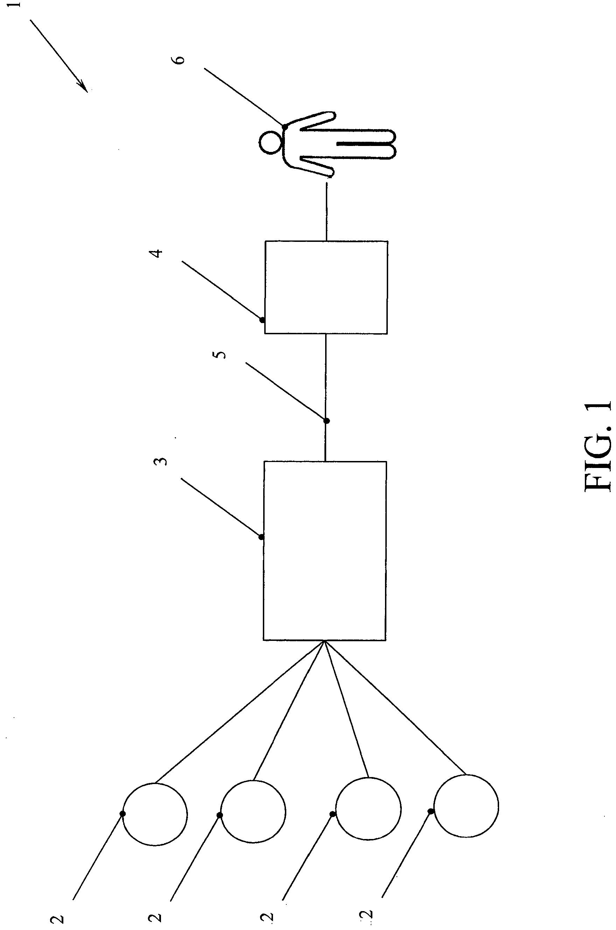

The present invention will be better described by some preferred embodiments thereof, provided as a non-limiting example, with reference to the enclosed drawings, whose Figure 1 shows a block diagram of an embodiment of the system according to the present invention.

With reference to Figure 1, a system 1 for detecting, processing, and sharing a plurality of data related to one or more operating parameters of a plough, is adapted to provide an operator 6 with the plurality of data through at least one wireless data transmitting means 5 through radio waves, or infrared, or laser or other similar one, enabling its regulation in real time.

As shown in the Figure, the system 1 is composed of:
- a plurality of rotary sensors 2, such as for example magnetic rotary sensors, or other similar ones, adapted to detect the plurality of data related to one or more operating parameters of the plough;
- at least one device 3 for collecting and processing data, adapted to process and send the plurality of data related to one or more operating parameters, to at least one displaying device 4 in real time; and
- the fixed or mobile displaying device 4, such as for example a PC, or a tablet, or a smartphone, or other similar one, adapted to receive and a display the plurality of data sent by the device 3 for collecting and processing data through the wireless data transmitting means 5.

In particular, the device 3 for collecting and processing data is equipped with at least one data acquisition module, adapted to receive the plurality of data detected by the plurality of sensors 2, and by at least one processor equipped with a software to develop and store the plurality of data related to one or more operating parameters.

In particular, the system 1 is adapted to detect, through the plurality of sensors 2, the plurality of data related to only the following operating parameters:
- the width of at least one furrow produced by the action of the plough, allowing the operator 6 to obtain information related to the surface and the volume of earth moved by the action of the plough;
- the plough inclination, allowing the operator 6 to obtain information related to the efficient overturning of the ground and the crumbling degree of the ground itself;
- the position of the depth wheel which determines the working depth of the plough;
- the lateral displacement, called off-set, which determines the transverse position of the plough with respect to the tractor and the running direction: this latter one mainly determines the working width of the first body and must be regulated depending on the tractor width.

The displaying device 4 allows the operator 6 to display the plurality of data related to one or more operating parameters of the plough, allowing him to evaluate, in real time, one or more operating parameters depending on the type of ground, the humidity contained in the ground, the advancement speed of the plough, etc., and allowing the operator 6 to physically modify in real time such operating parameters, and simultaneously verify the result of such modifications on the displaying device 4. It will further be possible, through the activation on the displaying device 4 of a plurality of signalling elements, such as alarms, SMS or other similar ones, to signal that at least one value of one or more operating parameters, previously set by the operator 6, has been exceeded: since the parameters set by the operator does not change unless failures are present, such failures will thereby be timely signalled.

According to the invention, therefore, the displaying device 4 is adapted to set and store the desired values of the displayed quantities and, if the received parameters does not fall within the desired values, to send a suitable signal to the device 3, which will actuate solenoid valves (not shown) as opening and closing to restore the desired position.

Therefore, it is the system of the invention which establishes on which actuator to intervene and how much, and then informs the operator who will actuate the main oil flow from the tractor to perform such intervention.

The non claimed method for detecting, processing and sharing data which can be performed through the above described system is characterized by the following steps:
- providing the system 1;
- providing the plurality of sensors 2;
- detecting, by the plurality of sensors 2, the plurality of data related to one or more operating parameters;
- collecting, by the device 3, through the data acquisition module, the plurality of data detected by the plurality of sensors 2;
- processing, by the device 3, the plurality of data collected through the processor equipped with software;
- sending the plurality of data from the device 3 to the displaying device 4;
- displaying the plurality of data on the displaying device 4;
- displaying the plurality of data by the operator 6; and
- evaluating, by the operator 6, the plurality of data related to one or more operating parameters and regulating in real time said plough depending on the values of such one or more operating parameters.

For example, a parameter can be the increase of the working width or the correction of the vertical inclination of the plough.

As regards the operation of the inventive method, sometimes when plowing, for a short working length, working parameters must be changed even if they were optimum and set with care, for example when there are obstacles or a length of ground with a great slope, or due to an excessive effort of the tractor in a hard section of the ground, etc.

Afterwards, going back to the previous exact parameters is not easy and often implies a series of attempts before obtaining the desired work.

The system allows reading the set parameters and therefore an easy setting of what is desired.

## Claims

1. System (1) comprising a tractor operatively connected to a plough, said system being designed for detecting, processing and sharing a plurality of data related to operating parameters of a plough, said system (1) being composed of:
- a plurality of rotary sensors (2) designed to detect said plurality of data related to said one or more operating parameters of said plough; collecting and processing data,
- at least one device (3) for to process and send said plurality of data related to said operating parameters of said plough, to at least one displaying device (4) in real time;
- said mobile displaying device (4) of a PC, tablet or smartphone type, designed to receive and to display said plurality of data sent by said device (3) for collecting and processing data through at least one wireless data transmitting means (5; and
- a plurality of solenoid valves, actuated by corresponding actuators, operatively connected to said device (3);
wherein said operating parameters are only:
- width and depth of at least one furrow produced by an action of said plough, allowing said operator (6) to obtain information related to a surface and a volume of earth moved by said action of said plough, determining at least one regularity degree of a bottom of said furrow;
- inclination of said plough;
- position of the depth wheel which determines the working depth of said plough; and
- lateral displacement, called off-set, allowing said operator (6) to obtain information related to the amount of surface worked by the first body of said plough;
wherein said displaying device (4), if the values of the received parameters do not fall within values set and stored therein, is designed to send a signal to the device (3) which is designed to actuate said solenoid valves as opening and closing, to restore the set values of said parameters, said system (1) being designed to establish on which actuator to intervene and how much, and to inform the operator, said actuator on which to intervene being designed to be actuated by a main oil flow from the tractor enabled by the operator;
wherein said displaying device (4) is designed to allow an operator (6) to display said plurality of data related to said one or more operating parameters of said plough, allowing said operator (6) to evaluate in real time said plurality of data and to perform at least one modification of said one or more operating parameters, and simultaneously to verify a result of said modification on said displaying device (4); and
wherein said device (3) for collecting and processing data is equipped with at least one data acquisition module, designed to receive said plurality of data detected by said plurality of sensors (2), and by at least one processor equipped with a software, designed to develop and store said plurality of data.

## Patentansprüche

1. System (1) mit einem mit einem Pflug wirkverbundenen Traktor, wobei das System zum Erfassen, Verarbeiten und Teilen einer Vielzahl von Daten in Bezug auf Betriebsparameter eines Pflugs ausgelegt ist, wobei das System (1) zusammengesetzt ist aus:
- eine Vielzahl von Drehsensoren (2), die dazu bestimmt sind, die Vielzahl von Daten bezüglich des einen oder der mehreren Betriebsparameter des Pfluges zu erfassen, die Daten zu sammeln und zu verarbeiten;
- mindestens eine Vorrichtung (3) zum Verarbeiten und Senden der Vielzahl von Daten, die sich auf die Betriebsparameter des Pflugs beziehen, an mindestens eine Anzeigevorrichtung (4) in Echtzeit;
- die Anzeigevorrichtung (4) vom PC-, Tablet- oder Smartphone-Typ, die dafür ausgelegt ist, die Vielzahl von Daten zu empfangen und anzuzeigen, die von der Datenerfassungs- und -verarbeitungsvorrichtung (3) mittels mindestens eines drahtlosen Datenübertragungsmittels (5) gesendet werden; und
- eine Vielzahl von Magnetventilen, die durch entsprechende Aktuatoren betätigt werden und betriebsmäßig mit der Vorrichtung (3) verbunden sind;
wobei denen die Betriebsparameter nur sind:
• Breite und Tiefe von mindestens einer durch die Wirkung des Pfluges erzeugten Furche, die es dem Bediener (6) ermöglicht, Informationen über die Oberfläche und das Volumen der durch die Wirkung des Pfluges bewegten Erde zu erhalten, wobei mindestens ein Grad der Regelmäßigkeit der Boden der Nut;
• Neigung des Pfluges;
• Position des Tastrades, die die Arbeitstiefe des Pfluges bestimmt; und
• seitliche Verschiebung, Offset genannt, die es der Bedienungsperson (6) ermöglicht, Informationen über die vom ersten Körper des Pfluges bearbeitete Fläche zu erhalten;
wobei die Anzeigevorrichtung (4), wenn die Werte der empfangenen Parameter nicht in die eingestellten und darin gespeicherten Werte fallen, dazu ausgelegt ist, ein Signal an die Vorrichtung (3) zu senden, die zum Betätigen der Magnetventile ausgelegt ist beim Öffnen und Schließen zum Zurücksetzen der eingestellten Werte der Parameter, wobei das System (1) so ausgelegt ist, dass es feststellt, welcher Aktuator und in welchem Ausmaß einzugreifen ist, und den Bediener informiert, wobei der Aktuator, an dem eingegriffen werden soll, ausgelegt ist, um durch einen vom Bediener freigegebenen Hauptölstrom des Traktors betrieben werden;
wobei die Anzeigevorrichtung (4) dazu ausgelegt ist, einem Bediener (6) zu ermöglichen, die Vielzahl von Daten in Bezug auf den einen oder die mehreren Betriebsparameter des Pflugs anzuzeigen, wodurch es dem Bediener (6) ermöglicht wird, die Vielzahl von Daten rechtzeitig auszuwerten und Vornehmen mindestens einer Modifikation des einen oder der mehreren Betriebsparameter und gleichzeitiges Verifizieren eines Ergebnisses der Modifikation auf der Anzeigevorrichtung (4); und
wobei die Datenerfassungs- und -verarbeitungsvorrichtung (3) mit mindestens einem Datenerfassungsmodul ausgestattet ist, das dafür ausgelegt ist, die mehreren Daten zu empfangen, die von den mehreren Sensoren (2) erfasst werden, und von mindestens einem Computer, der mit Software ausgestattet ist, die geeignet ist, um zu entwickeln und Speichern der Vielzahl von Daten.

## Revendications

1. Système (1) comprenant un tracteur relié fonctionnellement à une charrue, ledit système étant conçu pour la détection, le traitement et le partage d'une pluralité de données relatives aux paramètres de fonctionnement d'une charrue, ledit système (1) étant composé de :
- une pluralité de capteurs rotatifs (2) conçus pour détecter ladite pluralité de données relatives audit un ou plusieurs paramètres de fonctionnement de ladite charrue, collecter et traiter les données ;
- au moins un dispositif (3) de traitement et d'envoi de ladite pluralité de données relatives auxdits paramètres de fonctionnement de ladite charrue, à au moins un dispositif d'affichage (4) en temps réel ;
- ledit dispositif d'affichage (4) de type PC, tablette ou smartphone, adapté pour recevoir et afficher ladite pluralité de données envoyées par ledit dispositif de collecte et de traitement de données (3) au moyen d'au moins un moyen de transmission de données sans fil (5) ; et
- une pluralité d'électrovannes, actionnées par des actionneurs correspondants, fonctionnellement connectées audit dispositif (3) ;
dans lequel lesdits paramètres de fonctionnement sont uniquement :
• largeur et profondeur d'au moins un sillon produit par une action de ladite charrue, permettant audit opérateur (6) d'obtenir des informations sur la surface et le volume de terre déplacés par ladite action de ladite charrue, déterminant au moins un degré de régularité de la fond de ladite rainure;
• inclinaison de ladite charrue ;
• position de la roue de profondeur qui détermine la profondeur de travail de ladite charrue ; et
• Déplacement latéral, dit déporté, permettant audit opérateur (6) d'obtenir des informations sur la quantité de surface travaillée par le premier corps de ladite charrue ;
dans lequel ledit dispositif d'affichage (4), si les valeurs des paramètres reçus ne tombent pas dans les valeurs définies et stockées dans celui-ci, est conçu pour envoyer un signal au dispositif (3) qui est conçu pour actionner lesdites électrovannes en ouverture et en fermeture pour la remise à zéro des valeurs de consigne desdits paramètres, ledit système (1) étant conçu pour établir sur quel actionneur intervenir et dans quelle mesure, et informer l'opérateur, ledit actionneur sur lequel intervenir étant destiné à être actionné par un flux principal d'huile du tracteur activé par l'opérateur ;
dans lequel ledit dispositif d'affichage (4) est conçu pour permettre à un opérateur (6) d'afficher ladite pluralité de données concernant ledit un ou plusieurs paramètres de fonctionnement de ladite charrue, permettant audit opérateur (6) d'évaluer dans le temps en réalisant ladite pluralité de données et effectuer au moins une modification desdits un ou plusieurs paramètres de fonctionnement, et vérifier simultanément un résultat de ladite modification sur ledit dispositif d'affichage (4) ; et
dans lequel ledit dispositif de collecte et de traitement de données (3) est équipé d'au moins un module d'acquisition de données, conçu pour recevoir ladite pluralité de données détectées par ladite pluralité de capteurs (2), et par au moins un ordinateur équipé d'un logiciel, apte à développer et stocker ladite pluralité de données.
